# EUROPEAN PATENT APPLICATION

(11) **EP 2 712 741 A1**
(43) Date of publication of application: **02.04.2014**
(21) Application number: 12186778.2
(22) Date of filing: 01.10.2012
(51) Int. Cl.: B60B 1/02, B60B 1/00

(54) **A bicycle wheel structure**

(71) Applicant: Joy Cycle Parts (Shanzhen) Co Ltd, ShenZhen Guangdong (CN)
(72) Inventor: Chen, Shih-Wei, ShenZhen (CN)
(74) Representative: Baldwin, Mark

(57) **Abstract**

A bicycle wheel structure comprises a hub, spoke wires and a rim, wherein the front and back end of the spoke wires are connected to the hub and the rim respectively, wherein: spoke wires are arranged in a group of five spoke wires to form a spoke wire group, wherein each spoke wire group has an interweaving spoke wire ratio of 2:3 , and the hub and the rim are connected to at least three groups of the spoke wire group. said spoke wire group comprise a fifth spoke wire that works as a force balancing wire for the other four spoke wires, wherein, the first end of the fifth spoke wire is connected to the driving end of the hub, and the second end of the fifth spoke wire is connected to the rim; and said fifth spoke wire is arranged symmetrically in, or near the centre of the spoke wire group.

## Description

### Field of the Invention

The present invention relates to the field of bicycle technology and particularly relates to bicycle wheel structures.

### Background Technology

With the improvement in people's standard of living, increased environmental awareness and the need to improve fitness, bicycles, both as a means of transport and as a kind of fitness equipment, are becoming more and more popular. As bicycles become more and more popular, people are also becoming more and more demanding of the quality of bicycles, particularly, but not exclusively, features such as riding comfort, overall body balance and durability.

In order to meet these demands, bicycle manufacturers have been developing new technologies that can be used on bicycles Many technological improvements have been introduced that focus on bicycle wheels. Typically a bicycle wheel comprises a hub, a rim and spoke wires. The hub and rim are connected by a plurality of spoke wires. Typically, spoke wires are arranged in a 1:1 criss-cross ratio connected to the left and right side of the hub. A chain drive mechanism or a brake system is usually mounted on one side of the hub. When working, the chain drive mechanism or brake system exerts a force on that side of the hub. This will happen in essentially the same way, regardless of whether the source of the force is a chain drive mechanism mounted on the rear wheel or a disc brake system mounted on the front or rear wheel. The uneven forces acting on the hub, spoke wires and the rim result in poor balance of the bicycle. Furthermore, as each spoke wire receives different push and pull forces, especially in the long term, those spoke wires that receive greater forces will wear out sooner than other spoke wires and constitute a hidden danger for the bicycle user.

To solve these problems Chinese Patent Application No. 01244882.6 discloses convergent spoke wires based on a ratio of 1:2 interweaving connected to the left and right sides of the hub. However, this does not solve the on going problems with bicycle wheels. More particularly, on the side of the hub with more spoke wires connected to it, these spoke wires receive less force than the spoke wires on the side of hub with less spoke wires connected to it. As a result, the forces exerted on the spoke wires from the hub and rim are still not balanced, causing premature wear or failure of certain spoke wires.

### SUMMARY OF THE INVENTION

An object of the invention is to address the shortcomings of the prior art and provide a new structure for a bicycle wheel that provides a good force balance, and long lasting life characteristics, or at least to provide alternatives to existing products.

The invention provides a bicycle wheel structure comprising a hub, a rim and spoke wires. The ends of the wires are connected to the hub and the rim. The spoke wires are grouped in groups of five to form a plurality of spoke wire groups. In each spoke wire group the spoke wires are arranged in a 2:3 interweaving ratio. The hub and the rim are connected by at least three spoke wire groups.

As a preferred arrangement, the hub and the rim are connected by three to ten spoke wire groups.

As a preferred arrangement, three of the spoke wires from the spoke wire group are connected to the hub on its driving end, and the other two spoke wires are connected to non-drive end of the hub.

As a preferred arrangement, one of the spoke wires from the spoke wire group is denoted as a fifth spoke wire and it acts as a force balancer for the other four spoke wires in the spoke wire group. The fifth spoke wire is intentionally set in the plane of the axis passing through the hub and the rim.

As a preferred arrangement, the spoke wire group further comprises a first spoke wire mini group and a second spoke wire mini group. The first end of spoke wires in the first spoke wire mini group is attached to the hub and the second is connected to the rim; the first and second spoke wire mini group crosses each other in a X shape; the first end of the fifth spoke wire is arranged in the middle of the first end of first and second spoke wire mini group; and the second end of the fifth spoke wire is arranged in the middle of the second end of first and second spoke wire mini group.

As a preferred arrangement, the first spoke wire mini group comprises a first spoke wire and a second spoke wire. The first end of the first and second spoke wire is connected to the first and second side of hub respectively. The second end of first and second spoke wire is connected to the rim. The second spoke wire mini group comprises a third spoke wire and a fourth spoke wire. The first end of the third and fourth spoke wire is connected to the first and second end of hub respectively. The second end of third and fourth spoke wire is connected to the rim.

As a preferred arrangement, the first spoke wire mini group and second spoke wire mini group are symmetrically arranged around the hub; the first and second spoke wire crosses but not touching each other; and the third and fourth spoke wire crosses but not touching each other.

As a preferred arrangement, the first end of the first and third spoke wire is connected to the first side of the hub; the first and third spoke wire crosses each other in a X shape; the first end of the second and fourth spoke wire is connected to the second side of the hub; and the second and fourth spoke wire crosses each other in a X shape.

As a preferred arrangement, the second end of the first spoke wire is connected to the rim in a position between the second end of second and fifth spoke wire; the distance between the position of the second end of the first and second spoke wire is a first pitch, and the position between the second end of the first and fifth spoke wire is a second pitch; wherein, the first pitch is shorter than the second pitch for better mechanical balance of rim.

### BRIEF DESCRIPTION OF THE DRAWINGS

In order that the invention may be well understood, some embodiments thereof, which are given by way of example only, will now be described with reference to the drawings in which:
Figure 1 is a schematic perspective view of a bicycle wheel;.
Figure 2 is a side view of the bicycle wheel of Figure 1;
Figure 3 shows forces acting on the bicycle wheel of Figures 1 and 2;
Figure 4 is a schematic perspective view of a second bicycle wheel; and
Figure 5 is a side view of the bicycle wheel of Figure 4.

### DETAILED DESCRIPTION OF THE ILLUSTRATED EMBODIMENTS

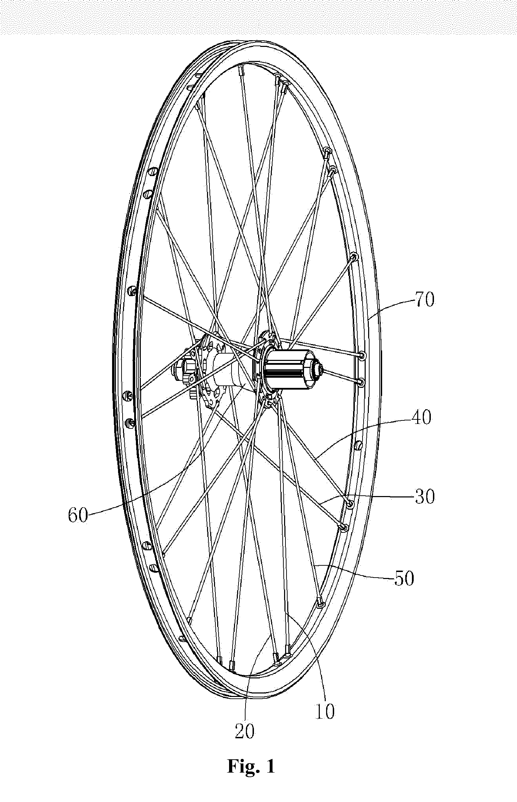

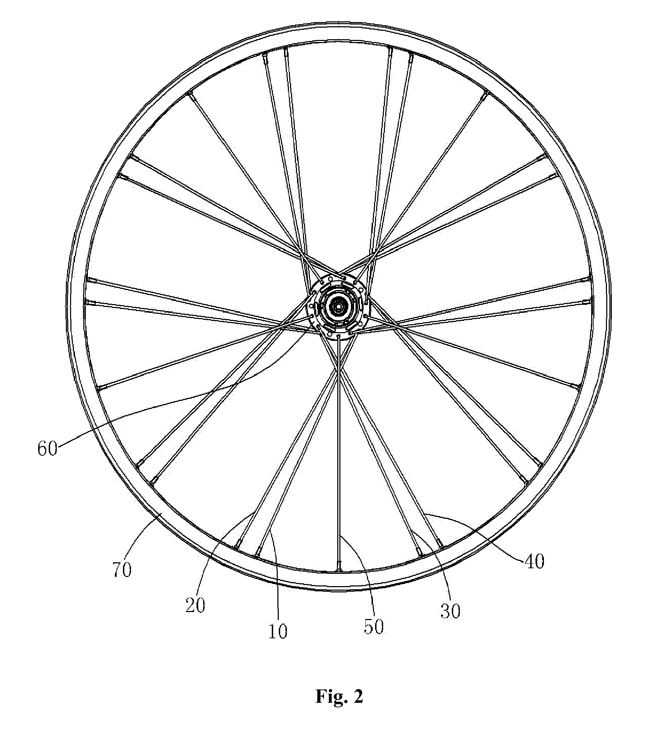

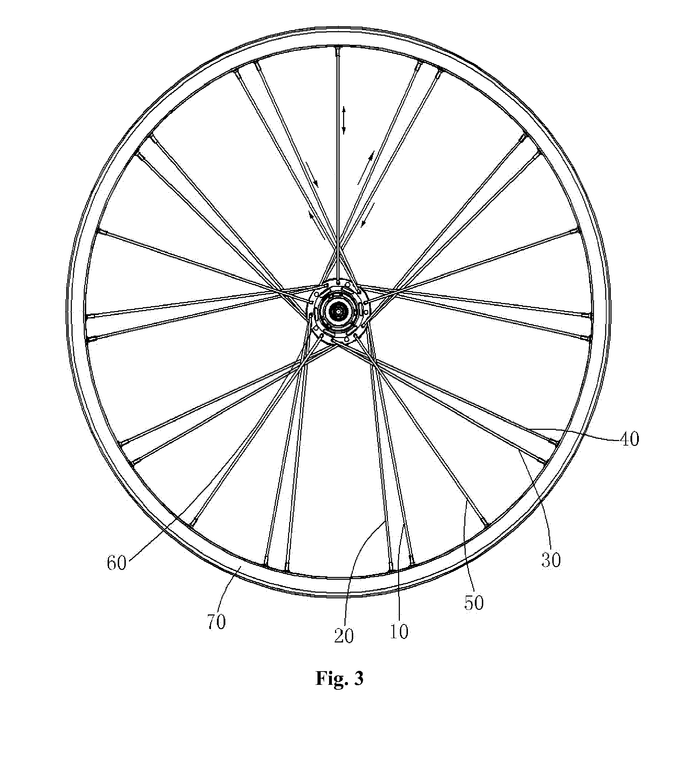

A bicycle wheel structure, as shown in Figure 1 to Figure 3, includes a hub 60, spoke wires 10, 20, 30, 40, 50 and a rim 70. The driven end of the hub 60 is provided with a drive mechanism for a sprocket mechanism. The convergent ends of the spoke wires are respectively connected to the hub 60 and the rim 70. The spoke wires are arranged in groups of five in a 2:3 interweaving ratio. The hub 60 and the rim 70 are connected by at least three of these groups of spoke wires. The groups of spoke wires are evenly spaced circumferentially around the rim 70.

In the embodiment illustrated by Figures 1 to 3, the hub 60 and rim 70 are connected by five groups of spoke wires. However, in other embodiments there may be three to ten groups of spoke wires.

Three spoke wires 10, 40, 50 of each spoke wire group are connected to the driven end (first side) of the hub 60 and the other two spoke wires 20, 30 are connected to the non-driven end (second side) of the hub. With this arrangement, forces acting on the hub are distributed more evenly between each of the spoke wires in the spoke wire group. As a result of this arrangement, early failure or premature wear of the spoke wires can be minimised, while also providing better riding comfort and balance.

Each spoke wire group comprises a first spoke wire mini group and a second spoke wire mini group. The first spoke wire mini group comprises a first spoke wire 10 and a second spoke wire 20. The first ends (radially inner ends) of the first and second spoke wires 10, 20 are connected to the first and second sides of hub 60 respectively. The second ends (radially outer ends) of first and second spoke wires 10, 20 are connected to the rim 70. The second spoke wire mini group comprises a third spoke wire 30 and a fourth spoke wire 40. The first ends (radially inner ends) of the third and fourth spoke wires 30, 40 are connected to the second and first sides of hub 60 respectively. The second ends (radially outer ends) of third and fourth spoke wires 30, 40 are connected to the rim 70.

In each spoke wire group, the fifth spoke wire 50 works as a force balancer for the other four spoke wires in the group. The first end of fifth spoke wire 50 is connected to the driven end of the hub and the second of the fifth spoke wire 50 is connected to the rim 70. The fifth spoke wires 50 are arranged symmetrically in or near the centre of the respective spoke wire groups.

The fifth spoke wire 50 of each spoke wire group is connected to the hub 60 and rim 70 in a position that is perpendicular to the axis of hub 60. With this arrangement the push and pull forces of the hub and the rim can be balanced by the fifth spoke wire 50.

The first and second spoke wire mini groups cross each other in an X shape. In the illustrated embodiment the spoke wire mini groups cross at a location nearer to the hub than the rim so that the X shape is not symmetrical. The first end of the fifth wire 50 in each group is disposed centrally between the first ends of the spoke wires of the first and second spoke wire mini groups. The second end of the fifth spoke wire 50 in each group is disposed centrally between the second ends of the spoke wires of the first and second spoke wire mini groups.

The first and second spoke wire mini groups are symmetrically arranged around the hub 60. The first and second spoke wires 10, 20 of a spoke wire group cross the third and fourth spoke wires 30, 40 of the group without touching each other.

The first ends of the first and fourth spoke wires 10, 40 are connected to the first side of the hub 60. The first and fourth spoke wires 10, 40 cross each other in an X shape. The first ends of the second and third spoke wires 20, 30 are connected to the second side of the hub 60. The second and third spoke wires 20, 30 cross each other in an X shape. In each case, the spoke wires cross at a location closer to the hub than the rim so that the X shape is not symmetric. In the illustrated embodiment the spoke wires cross at a location adjacent the hub.

The second end of the first spoke wire 10 is connected to the rim 70 in a position between the second end of second and fifth spoke wires 20, 50. The distance between the second ends of the first and second spoke wires 10, 20 is a first pitch. The distance between the second ends of the first and fifth spoke wires 10, 50 is a second pitch. The first pitch is shorter (less) than the second pitch for better mechanical balance of rim 70.

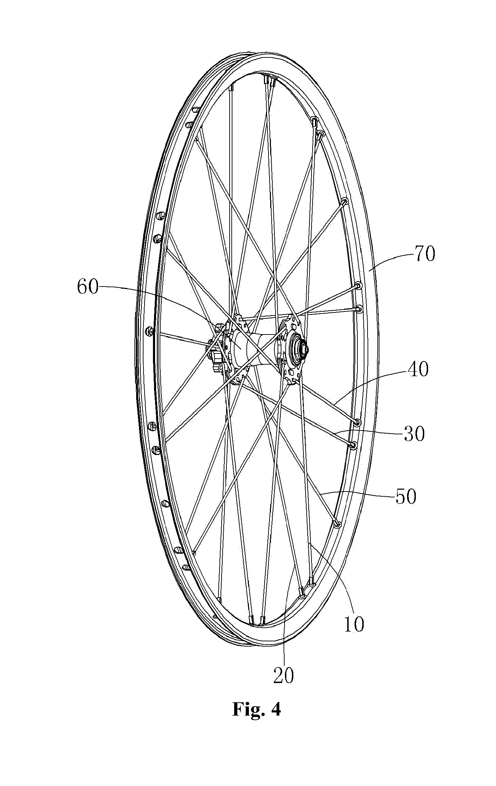

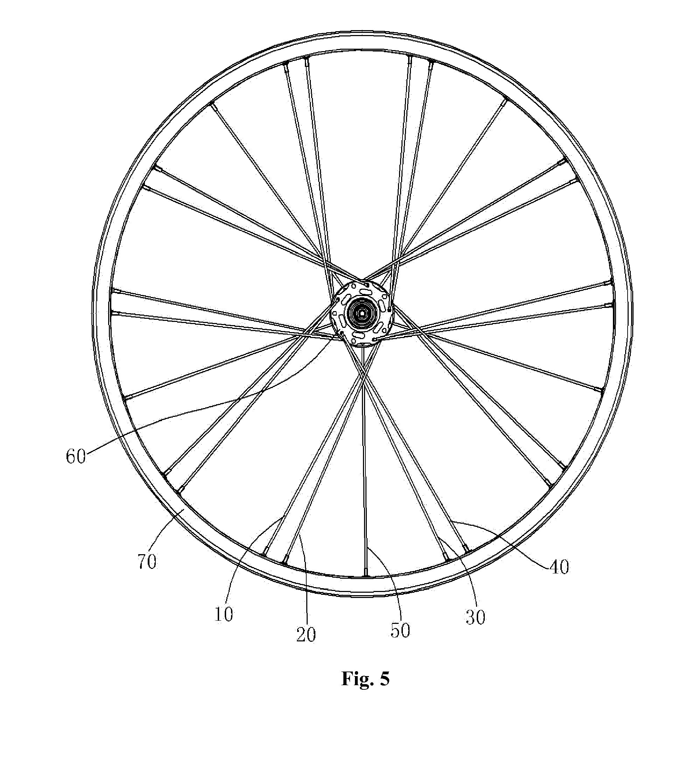

The bicycle wheel structure of the embodiment shown in Figures 4 and 5 is essentially the same as the structure shown in Figures 1 to 3. The differences are that the driven end of the hub 60 is provided with means for mounting a disc brake means and the rim 70 is provided with five groups of spoke wires and the spoke wires connected to the driven end of the hub are the spoke wires 20, 30, 50 with the spokes wires 10, 40 connected to the non-driven end. Thus, the driven end of the hub 60 is connected to five fifth spoke wires 50. The non-driven end of hub 60 is not connected to any fifth spoke wires 50.

It is to be understood that the labels first, second, third and fourth applied to the spoke wires in the description of the illustrated embodiments are used purely for ease of identification to distinguish from the fifth, force balancing, spoke wire and should not be taken as conferring any limitation on the scope of the claims.

It is to be understood that the illustrated embodiments show a bicycle wheel with spokes arranged into groups that comprise at least five spokes with an even number of spokes in each group connected to hub connection points on the side of the wheel that does not have a force applying device (for example a chain drive mechanism or disc brake system) and the remaining spokes, which is an odd number greater than the even number, connected to hub connection points on the side of the wheel that has the force applying device.

Rim 70 and hub 60, spoke wires 10, 20, 30, 40, 50, sprocket mechanisms and disc brake devices are known in the art and so are not described in detail herein.

## Claims

1. A bicycle wheel structure comprising a hub (60), spoke wires (10, 20, 30, 40, 50) and a rim (70), wherein the front and back ends of the spoke wires are connected to the hub and the rim respectively, the spoke wires are arranged in groups of five spoke wires to form a plurality of spoke wire groups, each spoke wire group has an interweaving spoke wire ratio of 2:3 and the hub and the rim are connected by at least three said spoke wire groups.

2. The bicycle wheel structure as claimed in claim 1, wherein said hub (60) and rim (70) are connected by between three and ten said spoke wire groups, the spoke wire groups being spaced circumferentially about the the rim.

3. The bicycle rim structure as claimed in claim 1, wherein said three of the spoke wires (10, 40, 50) in each spoke wire group are connected to a driven end of the hub (60) and said two of the spoke wires in each spoke wire group are connected to a non-driven end of the hub.

4. The bicycle wheel structure as claimed in claim 1, wherein each said spoke wire group comprises a spoke wire (50) configured as a force balancing spoke wire for the other four spoke wires, a first end of the force balancing spoke wire is connected to a driven end of the hub, the second end of the force balancing spoke wire is connected to the rim and said force balancing spoke wire is arranged symmetrically in, or near, the centre of the spoke wire group.

5. The bicycle wheel structure as claimed in claim 4, wherein said force balancing spoke wire (50) is disposed in a plane that is perpendicular to the axis of the hub or the rim.

6. The bicycle wheel structure as claimed in claim 4 or 5, each said spoke wire group comprises a first spoke wire mini group (10, 20) and a second spoke wire mini group (30, 40), the first ends of the spoke wires of the first spoke wire mini group are connected to the hub, the second of ends of the spoke wires of the first spoke wire mini group are connected to the rim, the first ends of the spoke wires of the second spoke wire mini group are connected to the hub, the second of ends of the spoke wires of the second spoke wire mini group are connected to the rim, the spoke wires of the first spoke wire mini group cross the spoke wires of the second spoke wire mini group, the first end of said force balancing spoke wire is disposed between the first ends of the spoke wires of said first spoke wire mini group and the first ends of the spoke wires of said second spoke wire mini group and the second end of said force balancing spoke wire is disposed between the second ends of the spokes wires of said first spoke wire mini group and the second ends of the spoke wires of said second spoke wire mini group.

7. The bicycle wheel structure as claimed in claim 6, wherein said first spoke wire mini group comprises a first spoke wire (10) and a second spoke wire (20), said second spoke wire mini group comprises a third spoke wire (30) and a fourth spoke wire (40) and the first ends of said first and fourth spoke wires are connected to said driven end of the hub and the first ends of said second and third spoke wires are connected to the non-driven end of the hub.

8. The bicycle wheel structure as claimed in claim 6 or 7, wherein the spoke wires (10, 20) of said first spoke wire mini group cross the spokes wires (30, 40) of said second spoke wire mini group without touching each other.

9. The bicycle wheel structure as claimed in claim 6, 7 or 8, wherein said second end of the first spoke wire (10) is connected to the rim (70) in a position between the second end of the second spoke wire (20) and the second end of the fifth spoke wire (50), the distance between the position of the second ends of the first and second spoke wires is a first pitch, the distance between the second end of the first and fifth spoke wires is a second pitch and the first pitch is less than the second pitch.

10. A bicycle wheel comprising a hub (60), a rim (70) and plurality of spokes (10, 20, 30, 40, 50) connecting said rim with said hub, said hub having first spoke connection positions on a first side of said wheel, second spoke connection positions on a second side of said wheel and being configured to mount a force applying device on said first side of said wheel and said spokes being arranged in at least three spoke groups that each comprises at least five spokes arranged such that an even number of spokes of the group have their radially inner ends connected with said second spoke connection positions and an odd number of spokes of the group that is one greater than said even number have their radially inner ends connected with said first spoke connection positions.

11. A bicycle wheel as claimed in claim 10, wherein said force applying device comprises at least one chain sprocket or a brake disc.

12. A bicycle wheel as claimed in claim 10 or 11, wherein each said group comprises five spokes.

13. A bicycle wheel as claimed in claim 10, 11 or 12, wherein each spoke group comprises a force balancing spoke (50) that is located intermediate respective first and second spoke mini groups (10, 20; 30, 40).

14. A bicycle wheel as claimed in claim 13, wherein half of the spokes (10, 40) in the first and second spoke mini groups have their radially inner ends connected with said first spoke connections and half of the spokes (20, 30) of said first and second spoke mini groups have their radially inner ends connected with said second connection positions.

15. A bicycle wheel as claimed in claim 14, wherein the respective spokes (10, 30) of each spoke mini group located closest to the force balancing spoke (50) of the spoke group have their radially outer ends spaced from the radially outer end of the force balancing spoke a distance that is greater than the distance between the respective radially outer ends of the spoke mini group.
